# FASCICULE DE BREVET EUROPEEN

(11) **EP 1 799 007 B1**
(45) Date de publication et mention de la délivrance du brevet: **08.02.2012**
(21) Numéro de dépôt: 06291925.3
(22) Date de dépôt: 14.12.2006
(51) Int. Cl.: H04W 12/06, H04L 29/06

(54) **Procédé et systéme pour localiser et authentifier un équipement mobile dans une zone domestique**
Verfahren und System zum Lokalisieren und Authentifizieren einer Mobileinrichtung in einem Heimbereich
Method and system for locating and authenticating a mobile equipment in a domestic area

(30) Priorité: 14.12.2005 FR 0512691
(43) Date de publication de la demande: 20.06.2007
(73) Titulaire: Societé Française du Radiotéléphone, 75008 Paris (FR)
(72) Inventeur: Abboud, Jean, 75005 Paris (FR)
(74) Mandataire: Debay, Yves

(56) Documents cités:
- WO-A-2004/034646
- US-A1- 2005 233 729
- MOULY M ET AL: "COMMUNICATION MANAGEMENT" GSM SYSTEM FOR MOBILE COMMUNICATIONS, LASSAY-LES-CHATEAUX, EUROPE MEDIA, FR, 1993, pages 500-565, XP000860008
- LEE C-C ET AL: "Extension of authentication protocol for GSM" IEE PROCEEDINGS : COMMUNICATIONS, INSTITUTION OF ELECTRICAL ENGINEERS, GB, vol. 150, no. 2, 16 avril 2003 (2003-04-16), pages 91-95, XP006020030 ISSN: 1350-2425

## Description

### DOMAINE TECHNIQUE DE L'INVENTION

La présente invention se rapporte au domaine des télécommunications appliqué à la localisation de grande précision.

L'invention concerne plus particulièrement un procédé pour localiser et authentifier un équipement mobile muni d'un module radio utilisant une technologie de courte portée (quelques dizaines de mètres) dans une zone déterminée dite zone domestique ainsi qu'un système pour mettre en oeuvre ce procédé.

### ARRIERE-PLAN TECHNOLOGIQUE DE L'INVENTION

Les méthodes et les équipements connus de l'art antérieur permettant de localiser un terminal mobile connecté au réseau radiotéléphonique cellulaire comme, par exemple, un téléphone portable, s'appuient sur l'identification de la ou les cellules de couverture radio utilisée par ce terminal mobile, par exemple, lors de la communication téléphonique. La localisation offerte par cette approche classique de couverture radio ne permet cependant pas de localiser précisément le lieu où se trouve l'utilisateur du terminal mobile, par exemple, l'étage dans un bâtiment dans un milieu urbain. Les étages en hauteur sont particulièrement concernés car, exposés à un grand nombre de cellules, il est alors difficile de les localiser sur la base des cellules. Par conséquent, cette approche ne permet pas de différencier les localisations, par exemple, de deux abonnés du même réseau radiotéléphonique cellulaire se trouvant au même moment dans le même immeuble à des étages différents. Pour augmenter la précision de la localisation offerte par cette approche classique, il faudrait installer des relais radio à l'endroit même où se trouve l'utilisateur ce qui est irréalisable en pratique et très coûteux.

D'autres méthodes connues de l'art antérieur permettant de localiser un terminal mobile connecté au réseau radiotéléphonique cellulaire comme, par exemple, un téléphone portable, sont conditionnées par la présence dans le terminal ou chez son utilisateur, d'un équipement particulier supplémentaire connecté au système de positionnement par satellites dit GPS (en anglais Global Positioning System). Ces méthodes nécessitent que le mobile soit visible des satellites de positionnement et qu'il soit donc à l'extérieur. De plus, la localisation offerte par cette approche GPS ne permet toujours pas de localiser précisément le lieu où se trouve l'utilisateur du terminal mobile, par exemple, l'étage dans un bâtiment dans un milieu urbain. Par conséquent, cette approche ne permet pas non plus de différencier les localisations, par exemple, de deux abonnés du même réseau radiotéléphonique cellulaire dont les zones domestiques ou, autrement dit, les appartements, se trouvent dans le même immeuble aux étages différents ou, plus encore, sur le même palier. En outre, le coût supplémentaire d'un équipement GPS par rapport au coût d'un téléphone mobile classique est élevé.

D'autres méthodes connues de l'art antérieur permettant de « localiser » un terminal mobile connecté au réseau radiotéléphonique cellulaire comme, par exemple, un téléphone portable, par rapport à un autre terminal mobile comme, par exemple, un terminal mobile dans un véhicule. L'intérêt d'une telle association réside dans la possibilité d'utiliser une antenne cellulaire de forte puissance d'émission installée de manière fixe sur la voiture, pour transmettre les communications issues du téléphone portable muni d'une antenne cellulaire de faible puissance d'émission via le réseau radiotéléphonique cellulaire. L'utilisation de l'antenne de forte puissance d'émission permet d'avoir une liaison téléphonique de meilleure qualité. Dans un mode de réalisation, le téléphone est doté d'une liaison par fil ou câble avec l'équipement correspondant de la voiture qui supporte les réceptions/émissions radio provenant du réseau radiotéléphonique cellulaire. Les flux de données ou de paroles générés lors de la communication téléphonique à partir du téléphone mobile, passent du téléphone mobile au véhicule par le câble de connexion, puis sont émis par l'antenne du véhicule à l'aide des ondes radio vers le réseau radiotéléphonique cellulaire. Dans un autre mode de réalisation, à la fois le véhicule et le téléphone mobile sont équipés des modules radio utilisant une technologie de courte portée (quelques dizaines de mètre), par exemple, du type « Bluetooth » (marque déposée) et sont munis d'antennes supplémentaires de courte portée. Une fois que les émissions de courte portée du téléphone portable sont détectées par le module radio Bluetooth du véhicule, les deux équipements se mettent en communication l'un avec l'autre. Les flux de données ou de paroles générés lors de la communication téléphonique à partir du téléphone mobile, passent alors du téléphone mobile au véhicule par les ondes radio de courte portée (quelques dizaines de mètres), puis sont émis par l'antenne du véhicule à l'aide des ondes radio dont la portée est très largement supérieure à une dizaine de mètres (pouvant atteindre quelques dizaines de kilomètres en pratique dans un relief plat d'une plaine ou à la surface de la mer), vers le réseau radiotéléphonique cellulaire. Cette solution cependant ne permet pas de « fixer » le téléphone mobile dans l'espace, la voiture, contrairement à la zone domestique, étant vouée aux déplacements.

Il existe donc un besoin de rendre plus représentatives de la réalité les informations de détection/identification d'un terminal mobile dans une zone domestique, par exemple, pour offrir à l'utilisateur d'un terminal mobile un accès à un service privilégié.

Le document US2005/0233729 se rapporte au contrôle d'accès d'un téléphone cellulaire via un réseau local sans fil (typiquement un réseau « hot spot » Wi-Fi 802.11). Le réseau local sans fil se comporte comme un réseau d'accès particulier et intégré au réseau cellulaire. Il ne vise donc qu'à étendre le réseau cellulaire. Un seul équipement mobile est utilisé et son identification-authentification se fait par les protocoles classiques du réseau cellulaire. Selon l'enseignement de ce document, un contrôle d'authentification est prévu sur la base de l'échange d'un jeton (« token ») dans un environnement étendu d'un réseau cellulaire et de réseaux sans fil.

Le document EP 1 519 603 se rapporte à une méthode et un dispositif pour authentifier le téléphone mobile d'un utilisateur pour utiliser un service offert via un premier système de communication, l'utilisateur étant identifiable par une unité d'authentification qui peut être dédiée sans ambigüité à l'utilisateur et permet l'authentification de l'utilisateur dans un second système de communication. Selon l'enseignement de ce document, l'authentification de l'utilisateur est exclusivement réalisée en référence à un service particulier requis par l'utilisateur via un serveur du fournisseur de ce service.

### DESCRIPTION GENERALE DE L'INVENTION

La présente invention a donc pour objet de supprimer un ou plusieurs des inconvénients de l'art antérieur et de proposer un système utilisant une technologie radio de courte portée pour localiser et authentifier un équipement mobile dans une zone domestique.

Un objet supplémentaire de l'invention est de permettre une meilleure gestion de la signalisation.

A cet effet, il est proposé un système pour localiser et authentifier un équipement mobile dans une zone déterminée dite domestique selon la revendication 1.

Les revendications dépendantes 2 à 17 présentent d'autres caractéristiques selon certains modes de réalisation de l'invention.

L'invention a également pour objet de définir un procédé permettant de localiser et d'authentifier de manière fiable à l'aide de la technologie radio de courte portée un équipement mobile dans une zone domestique pour supprimer les inconvénients de l'art antérieur.

A cet effet, le procédé pour localiser et authentifier un équipement mobile dans une zone déterminée dite domestique selon la revendication 18.

Les revendications dépendantes 19 à 26 présentent d'autres caractéristiques selon certains modes de réalisation de l'invention.

L'invention avec ses caractéristiques et avantages ressortira plus clairement à la lecture de la description faite en référence au dessin annexé dans lequel :
la figure 1 représente de manière schématique un premier mode de réalisation du système selon l'invention.
la figure 2 représente de manière schématique un deuxième mode de réalisation du selon l'invention.

### DESCRIPTION DES MODES DE REALISATION PREFERES DE L'INVENTION

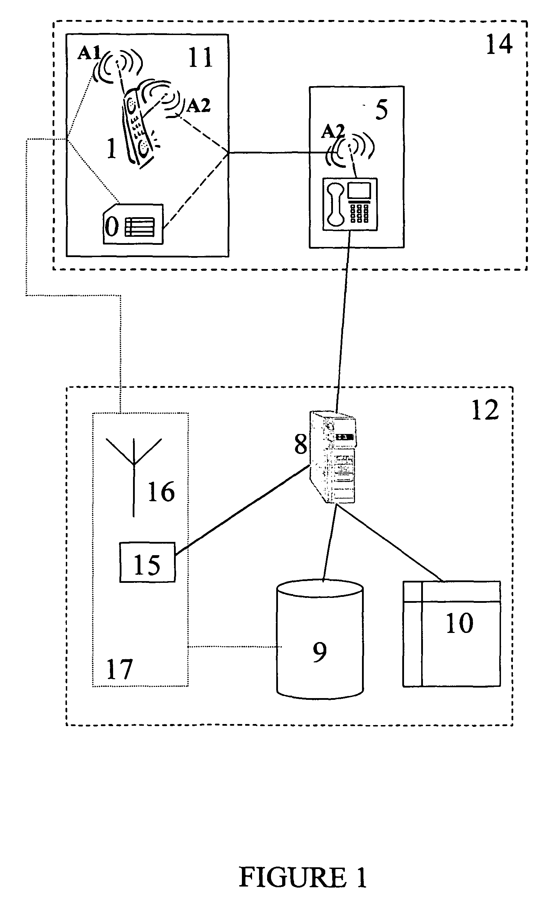

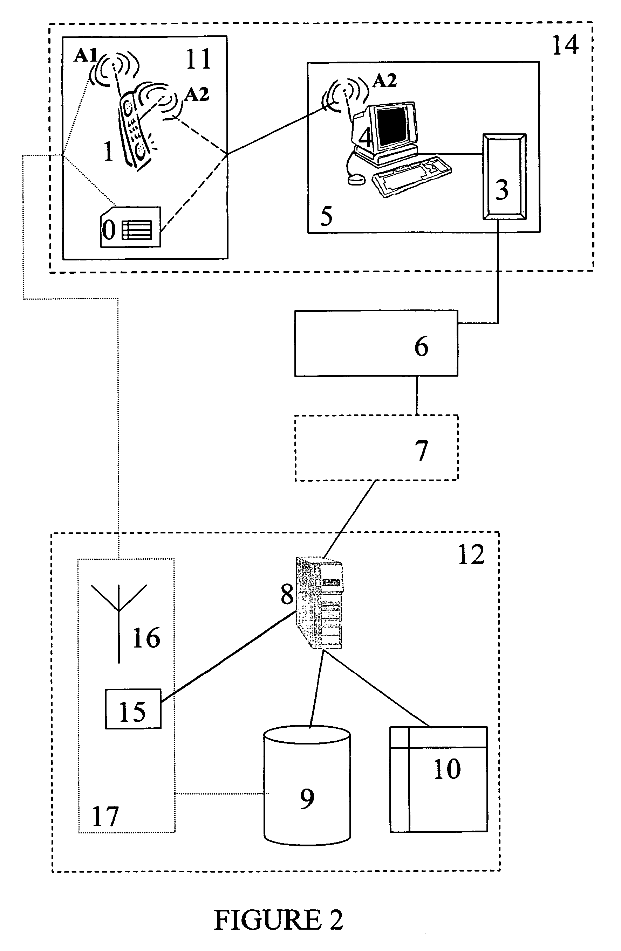

Tel qu'il est illustré sur les figures 1 et 2, le système selon l'invention comprend un premier terminal de communication radiotéléphonique cellulaire (11) comprenant un combiné téléphonique (1) et un objet essentiellement électronique à microcircuit et mémoire, à savoir, une carte (0) dite SIM (en anglais Subscriber Identity Module), contenant l'ensemble des caractéristiques de l'abonnement y compris l'identité du premier terminal dite IMEI (en anglais International Mobile Equipement Identity) et l'identité de l'abonné dite IMSI (en anglais International Mobile Subsriber Identity). Le système s'appuie sur une infrastructure connue du réseau radiotéléphonique cellulaire (12), par exemple, du type GSM (en anglais Global System for Mobile communications). Pour cela le combiné téléphonique (1) est muni d'une première antenne (A1) de type GSM permettant de transmettre les données vers les récepteurs de la station de base (16) dite BTS (en anglais Base Transceiver Station), le reste du réseau (contrôleur (15) BSC (en anglais Base Station Controller), MSC (en anglais Mobile-services Switching Center), SMS-C...) contrôlant le transfert de ces données est représenté par (16). Un sous-système radio (17) permet d'acheminer les données vers une base de données distante (9) de l'enregistreur de localisation nominal « HLR » (en anglais Home Location Register) dite base HLR, qui contient les profils des abonnés, leurs identifiants et leur localisation approximative.

Le réseau radiotéléphonique cellulaire (12) comporte avantageusement un serveur (8) interactif susceptible d'établir une connexion avec la base de données distante de l'enregistreur de localisation nominal « HLR » (9) et avec un autre réseau, par exemple, un réseau filaire ou câblé. Dans l'exemple de la figure 1, il s'agit d'un réseau téléphonique commuté public ou privé. Dans l'exemple de la figure 2, il s'agit d'un réseau mondial Internet ou d'un réseau privé d'entreprise Intranet.

Le premier terminal (11) est identifiable de manière connue par des moyens d'identification du réseau parmi d'autres terminaux connectés sur le réseau radiotéléphonique cellulaire (12) à l'aide, par exemple, de son numéro attribué par l'opérateur du réseau GSM (12). En outre, le premier terminal (11) comporte avantageusement un module radio utilisant une technologie de courte portée, c'est-à-dire, essentiellement quelques dizaines de mètres, par exemple, une technologie de type Bluetooth. Cette technologie radio de courte portée permet de communiquer sans fil à l'aide d'une deuxième antenne de courte portée (A2) dans une zone prédéterminée dite domestique (14), par exemple, dans un appartement où est domicilié l'utilisateur du premier terminal (11), avec d'autres équipements dotés d'un module radio avec une antenne de courte portée (A2) utilisant la technologie de courte portée, par exemple, de type Bluetooth.

Le système selon l'invention comprend également un second terminal de communication (5) s'appuyant sur une infrastructure du réseau du type filaire ou câblé, par exemple, le réseau téléphonique commuté public ou privé dit RTC, le réseau mondial Internet, le réseau privé d'entreprise Intranet etc. Ce deuxième terminal (5) est identifiable par des moyens d'identification du réseau filaire ou câblé parmi d'autres terminaux connectés sur le réseau filaire ou câblé.

Dans un mode de réalisation de l'invention illustré sur la figure 1, le second terminal (5) peut être un téléphone fixe du réseau téléphonique commuté public ou privé. Le terme « téléphone fixe » comprend une prise téléphonique correspondante géographiquement liée et solidaire de la zone domestique (14), par exemple, agencée sur un mur de l'appartement. Ainsi la zone domestique (14) est définie à partir d'un emplacement fixe, sûr et vérifiable du second terminal. Dans cet exemple, le deuxième terminal (5), c'est-à-dire, le téléphone fixe, est identifiable par des moyens d'identification du réseau filaire parmi d'autres terminaux connectés à l'aide de son numéro attribué par l'opérateur du réseau RTC.

Le système selon l'invention permet l'association d'un terminal de type (11) avec plusieurs terminaux de type (5). La zone prédéterminée de l'utilisateur peut être fragmentée en plusieurs morceaux : l'appartement, le bureau, la résidence secondaire, etc..

Le système selon l'invention permet aussi l'association d'un terminal de type (5) avec plusieurs terminaux de type (11). Ainsi, dans ce cas, plusieurs utilisateurs habitant le même appartement, bénéficieront et dépendront de la même zone domestique.

Dans l'exemple illustré sur la figure 2, le deuxième terminal est un microordinateur personnel (4) de type PC (en anglais Personal Computer) muni d'un modem (3), par exemple, du type boîtier ADSL (en anglais Asymmetric Digital Subscriber Line), connecté au réseau filaire ou câblé. Le terme « modem ADSL » (3) comprend une prise ADSL correspondante solidaire de la zone domestique (14), par exemple, agencée sur un mur de l'appartement. Comme précédemment, la zone domestique (14) est définie à partir d'un emplacement fixe, sûr et vérifiable du second terminal. Le deuxième terminal (5) est identifiable par des moyens d'identification du réseau parmi d'autres terminaux connectés sur le réseau filaire ou câblé. Pour cela on peut utiliser un ou plusieurs paramètres connus comme, par exemple :
- une adresse dite adresse IP du modem (3),
- une adresse dite adresse IP du microordinateur personnel (4).

L'adresse IP peut changer régulièrement mais l'association entre l'adresse IP et l'adresse géographique est bien connue du fournisseur d'accès Internet.

Le deuxième terminal (5) comporte de manière connue un module radio utilisant une technologie de courte portée, par exemple, une technologie de type Bluetooth, pour communiquer sans fil dans la zone domestique (14) avec d'autres équipements dotés d'un module radio utilisant cette même technologie de courte portée (donc de type Bluetooth dans le présent exemple). Pour cela, le deuxième terminal (5) est muni d'une antenne de courte portée (A2).

Dans les deux modes de réalisation illustrés sur les figures 1 et 2, la communication entre le premier (11) et le second (5) terminal s'opère directement via le module radio Bluetooth. Cependant, dans un autre mode de réalisation, la communication entre le premier (11) et le second (5) terminal s'opère via au moins un répéteur (non représenté sur les figures) agencé pour être compatible avec la technologie radio Bluetooth.

Dans l'exemple illustré sur la figure 2, le second terminal (5) et le serveur interactif (8) sont liés par deux routeurs (6, 7) du réseau filaire ou câblé, disposés hors la zone domestique (14).

Dans l'exemple illustré sur les figures 1 et 2, l'abonné du réseau, par exemple GSM, utilisant le premier terminal (11) et l'abonné du réseau filaire utilisant le second terminal (5) est la même personne. Dans un mode de réalisation de l'invention, le ou les abonnés dudit réseau GSM utilisant le premier terminal (11) et le ou les abonnés du réseau filaire ou câblé utilisant le second terminal (5) peuvent être des personnes différentes.

Pour mettre en oeuvre l'invention, le système selon l'invention comporte un certain nombre de modules et d'interfaces spécifiques permettant de combiner l'environnement GSM comprenant notamment la cellule radio de rattachement identifiable par le réseau GSM quand le premier terminal (11) se trouve dans la zone domestique (14), avec l'environnement « fixe » du second terminal (5) comprenant le téléphone fixe ou le modem ADSL (3). Le rôle fonctionnel de ces modules spécifiques du système selon l'invention est d'assurer que le premier terminal (11), c'est-à-dire, le combiné téléphonique (1) muni d'une carte SIM (0) et d'un module radio Bluetooth, se trouve dans la proximité immédiate d'un point donné, ce point étant matérialisé dans l'espace par le second terminal (5) muni d'un module radio Bluetooth, lié au réseau filaire ou câblé et capable de communiquer avec le réseau radiotéléphonique cellulaire de l'opérateur GSM.

Selon un mode de fonctionnement choisi, le premier (11) et le second (5) terminaux peuvent coopérer de manière automatique et transparente pour
- l'utilisateur du premier terminal (11) ;
- l'utilisateur du second terminal (5) ;
- l'utilisateur des premier (11) et second (5) terminaux.

Les caractéristiques d'identification du premier (11) et du second (5) terminal sont avantageusement déclarées et mémorisées préalablement dans la base de données distante de l'enregistreur de localisation nominal « HLR » (9) afin d'autoriser l'accès au service privilégié pour le premier terminal (11). En outre, les caractéristiques d'identification du premier terminal (11) sont avantageusement déclarées et mémorisées préalablement dans les moyens mémoires du deuxième terminal (5) et inversement.

Les modules spécifiques du système selon l'invention sont disposés comme précisé ci-après.

Le deuxième terminal (5) comporte avantageusement une interface pour détecter la présence de l'émission courte portée du premier terminal (11) et des moyens de demander un identifiant comme, par exemple, les informations (IMEI, IMSI) stockées dans la carte SIM (0), à ce premier terminal (11) et de vérifier que ce premier terminal (11) est autorisé à établir une communication par le réseau de téléphonie commuté RTC.

Les moyens de demander une identification comprennent :
- un module de reconnaissance et de transmission apte à réaliser une identification du premier terminal (11) déclaré venant d'être détecté par le module radio du second terminal (5) dans la zone domestique (14) et
- des moyens d'ouvrir une session de transmission de données horodatées d'identification contenant au moins une caractéristique d'identification du premier terminal (11) et au moins une caractéristique d'identification du second terminal (5) via le réseau téléphonique commuté à un moyen serveur interactif (8) susceptible d'établir une connexion avec la base de données distante de l'enregistreur de localisation nominal « HLR » (9) du réseau de radiotéléphonie (12).

La base de données distante de l'enregistreur de localisation nominal « HLR » (9) comporte des moyens d'établir une connexion avec le serveur (8) pour faire transmettre par le serveur interactif (8) au premier terminal (11) une demande d'authentification et des moyens de recevoir la réponse fournie par le terminal (11) et transmise par le serveur interactif (8) et de comparer cette réponse avec celle calculée par la base de données distante et de fournir au serveur interactif (8) une information horodatée lui permettant de mémoriser dans une base de données un état (IN - OUT) en correspondance avec les identifiants du premier terminal (11) permettant de décider si oui ou non le terminal (11) peut accéder à des services privilégiés de l'opérateur et/ou non au réseau téléphonique commuté. Cela permet avantageusement d'assurer l'authentification de la carte SIM (0) via le réseau filaire ou câblé. Pour ce faire, le serveur interactif (8) agit à la manière du commutateur de service mobile dit MSC (en anglais Mobile-services Switching Centre) dont le principe de fonctionnement bien connu consiste en ce que :
- le commutateur MSC demande des informations à la base de données distante de l'enregistreur de localisation nominal « HLR » en format [X, f(X)].
- La base de données distante de l'enregistreur de localisation nominal
   « HLR » envoie le signal en format [X] à la carte SIM (0).
- La base de données distante de l'enregistreur de localisation nominal
   « HLR » reçoit en retour de la carte SIM (0) une forme du signal qui doit être égale à [f(X)], obtenue à l'aide des moyens de calcul de la carte SIM (0), pour que la base de données distante de l'enregistreur de localisation nominal « HLR » attribue le statut horodaté (IN) permettant au téléphone mobile d'accéder au réseau. Si la forme du signal n'est pas égale à [f(X)], la base de données distante de l'enregistreur de localisation nominal « HLR » attribue le statut horodaté (OUT) ne permettant pas au téléphone mobile d'accéder à certains services privilégiés de l'opérateur ou au réseau commuté via le second terminal (5).

La différence fondamentale entre le commutateur MSC connu qui utilise une bande de fréquence radio pour passer les différents signaux et le serveur interactif (8) selon l'invention consiste en ce que les liaisons entre la carte SIM (0), la base de données distante de l'enregistreur de localisation nominal « HLR » et le serveur interactif (8) selon l'invention s'opèrent avantageusement via le réseau filaire ou câblé.

Dans un mode de réalisation, l'infrastructure du réseau GSM (12), comporte une base de données distante de type HLR/Auc (non représentée sur les figures), autre que la base de données distante de l'enregistreur de localisation nominal « HLR » (9). Comme la base de données distante de l'enregistreur de localisation nominal « HLR » (9), la base de type HLR/Auc contiendrait les profils des abonnés, leurs identifiants et leur localisation approximative. La présence de cette base HLR/Auc permet avantageusement d'éviter de surcharger la signalisation de la base de données distante de l'enregistreur de localisation nominal « HLR » (9) par des authentifications trop fréquentes du premier terminal (11).

Dans un mode de réalisation, le premier terminal (11) qui se fait passer auprès du second terminal (5) comme étant l'un des utilisateurs autorisés, reçoit régulièrement (par exemple, toutes les 5 minutes) de la part du serveur (8) par voie radio (par exemple au moyen d'un SMS) un code secret généré aléatoirement qui doit exécuter en retour, par la voie filaire à travers le second terminal (5), une série d'actions (par exemple, appels téléphoniques, renvoi d'un code, etc.) prouvant que le code a bien été reçu par le « bon » (c'est-à-dire celui qui est autorisé) premier terminal (11) et que ce dernier est toujours dans la zone domestique (14).

On peut aussi inverser le mécanisme pour que le code soit envoyé par le serveur interactif (8) par la voie filaire au second terminal (5) pour revenir au serveur interactif (8) par la voie radio à travers le premier terminal (11) tel quel ou sous la forme d'une action résultant du code (par exemple si le code est impair, le premier terminal (11) effectue un appel vers un numéro N1, et si le code est pair, le premier terminal (11) effectue un appel vers un numéro N2).

Le serveur (8) comporte des moyens de communiquer une information (IN - OUT) au second terminal (5) pour autoriser ou non l'accès du premier terminal (11) au réseau téléphonique commuté au travers du second terminal (5). Cela permet avantageusement d'indiquer au second terminal (5) et, éventuellement au premier terminal (11), si ce dernier est admis dans la zone domestique (14) du second terminal (5). Cela est particulièrement intéressant lorsque le second terminal (5) détecte une multitude de terminaux du type « premier terminal (11) » dans sa zone domestique (14) et est obligé de les différencier pour rejeter ceux qui n'ont pas été préalablement déclarés auprès du second terminal (5).

Dans un mode de réalisation, le second terminal (5) ayant mémorisé les premiers terminaux (11) sur lesquels il est autorisé à envoyer et à recevoir les flux de données et/ou de paroles , évite de demander des authentifications aux terminaux de type (11) sur lesquels il recevrait une réponse négative.

Dans un mode de réalisation, l'authentification du premier terminal comme indiqué ci-dessus, s'opère successivement tous les intervalles de temps, par exemple, toutes les 5 minutes par exemple, lorsque le premier terminal (11) se trouve dans la zone domestique (14) du second terminal (5). Cela permet avantageusement de procéder à des mises à jours régulières pour s'assurer que le premier terminal mobile (11) se trouve toujours dans la zone domestique (14) du second terminal (5). La durée exacte de l'intervalle de temps est définie par le serveur interactif (8) et partagée avec le premier (11) et le second (5) terminal. L'initiative du rafraîchissement de l'authentification, c'est-à-dire, des mises à jours mentionnées ci-dessus, appartient au serveur interactif (8). Cela permet avantageusement d'éviter les fraudes, par exemple, lors de la coupure volontaire de la liaison entre le second terminal (5) et le serveur interactif (8) pour cacher l'éloignement du premier terminal (11) de la zone domestique (14).

Dans une possible mise en oeuvre, le premier terminal (11) est doté d'un module de commutation apte à faire dévier et orienter les flux de données ou de paroles générés lors de la communication téléphonique de l'environnement radiotéléphonique cellulaire (12) du premier terminal (11) vers l'environnement filaire ou câblé du second terminal (5) à travers le module radio de courte portée (Bluetooth dans les exemples sur les figures 1 et 2, comme évoqué ci-dessus).

Selon un autre exemple de mise en oeuvre, le premier terminal (11) continue à utiliser le réseau radiotéléphonique comme à l'habitude mais les communications sont détectées comme émanant de la zone domestique (14) grâce à la consultation des informations mis à jour par le serveur interactif (8).

Le second terminal (5) est doté d'un module de dialogue gérant la réception et la transmission des flux d'information et/ou de données générés par la communication téléphonique entre, d'une part, les deux terminaux (11, 5) et, d'autre part, le réseau téléphonique commuté RTC. Cela permet avantageusement d'économiser une bande passante radio de l'environnement radiotéléphonique cellulaire (12) pour faire transiter les appels téléphoniques passés à partir du premier terminal (11) via le module radio Bluetooth et le second terminal (5) dans le réseau filaire. La réception et la transmission des flux d'information et/ou de données peuvent être effectuées selon un protocole sécurisé. Les informations et les données peuvent également être compressées de manière à minimiser le trafic via le réseau filaire ou câblé.

Le serveur interactif (8) comprend une interface téléphonie pour supporter les flux d'information et/ou de données générés lors de la demande d'authentification du terminal (11).

Dans un mode de réalisation, le premier terminal (11) comporte des moyens de détecter une communication par moyen radio de courte portée avec le second terminal (5) et de demander à l'utilisateur s'il veut utiliser une communication pour autoriser la procédure d'identification vis-à-vis du second terminal (5) et d'authentification vis-à-vis du réseau.

Dans un mode de communication, le second terminal (5) comporte des moyens pour mettre le premier terminal (11) en mode autonome « hors zone domestique (14) » en mettant une information qui fait basculer le premier terminal (11) sur l'utilisation de la liaison radiotéléphonique cellulaire (11, 17). Dans ce cas, l'utilisateur cesse de profiter des services privilégiés de l'opérateur de radiotéléphonie et selon un autre mode de mise en oeuvre, les flux de données et/ou de paroles générés par la communication téléphonique passent de manière classique à partir de la première antenne (A1) de type GSM via le sous-système radio (17) dit BSS comprenant le contrôleur (15) BSC et le récepteur de la station de base (16) BTS et non plus par la voie filaire ou câblée.

Dans un mode de réalisation, si toutes les connexions ne fonctionnent plus normalement, les premier (11) et second (5) terminaux se mettent en mode autonome affichant automatiquement un statut par défaut « hors zone domestique (14) » lors de la coupure d'au moins une liaison choisie parmi les liaisons suivantes : (a) la liaison entre le serveur interactif (8) et le second terminal (5) ; (b) la liaison entre le second terminal (5) et le premier terminal (11). Cela permet avantageusement de couper la boucle « environnement GSM du premier terminal (11) / environnement « fixe » du second terminal (5) » en évitant ainsi toute tentative de fraude, par exemple, lors de la coupure volontaire de la liaison entre le second terminal (5) et le serveur interactif (8) pour cacher l'éloignement du premier terminal (11) de la zone domestique (14).

La figure 2 illustre un mode de réalisation où le second terminal (5) comprend à la fois le modem ADSL (3) (souvent un routeur) mais également le microordinateur personnel (4). L'antenne radio de courte portée (A2) est installé sur le microordinateur personnel (4), ce dernier étant lié avec le modem ADSL (3) par fil ou câble.

Dans un autre mode de réalisation, l'antenne radio de courte portée (A2) peut être installée sur le modem ADSL (3), le microordinateur (4) étant lié avec le modem ADSL (4) par fil ou câble.

Dans un autre mode de réalisation, les antennes radio de courte portée (A2) peuvent être installées à la fois sur le microordinateur (4) et le modem ADSL (3). Dans ce cas, chacun de ces deux équipements dispose avantageusement d'un module radio utilisant une technologie de courte portée, c'est-à-dire, essentiellement quelques dizaines de mètres, par exemple, la technologie de type Bluetooth. Ainsi, la communication entre le microordinateur (4) et le modem ADSL (3) s'opère sans fil, ni câble, par des ondes radio de courte portée.

L'adresse IP du modem ADSL (3) est déclarée et mémorisée préalablement dans une base de données du serveur interactif (8) autorisant l'accès aux services privilégiés du premier terminal (11).

Dans un autre mode de fonctionnement, l'adresse IP du microordinateur (4) est également déclarée et mémorisée préalablement dans une base de données du serveur interactif (8) autorisant l'accès aux services privilégiés du premier terminal (11) à travers le second terminal (5).

Le micro-ordinateur personnel (4) est doté d'une application de reconnaissance et de transmission qui permet, par exemple, de vérifier l'adresse IP du microordinateur personnel (4) et/ou du modem (3) et d'envoyer ce numéro selon un protocole sécurisé.

Le serveur interactif (8) est muni d'un module de reconnaissance et de transmission. Ce module mémorise préalablement l'identifiant du premier terminal (11), comme par exemple, le MSISDN (en anglais Mobile Station International Services Digital Network number), et du second terminal (5), comme par exemple, l'adresse MAC (en anglais Medium Acces Control) ainsi que l'état horodaté (IN - OUT) en correspondance avec les identifiants du premier terminal (11) l'autorisant ou non à accéder à certains services privilégiés et/ou au réseau téléphonique commuté au travers du second terminal (5).

Dans un mode de réalisation, le module de reconnaissance et de transmission du serveur (8) mémorise une deuxième caractéristique d'identification du second terminal (5) constituée de l'adresse dite adresse MAC du second terminal (5). Cette adresse MAC du second terminal peut correspondre à l'adresse MAC du modem (3) et/ou à l'adresse MAC du microordinateur (4).

Le second terminal (5) comporte des moyens de transmettre cette adresse MAC du second terminal (5) lors de la session de transmission de données horodatées via le réseau filaire ou câblé du second terminal (5) au serveur interactif (8).

L'adresse MAC du second terminal (5) est déclarée et mémorisée préalablement dans la base du serveur interactif (8) pour permettre la vérification des données avant d'autoriser ou non l'accès du premier terminal (11) aux services privilégiés via le second terminal (5). Ceci limite l'accès du premier terminal (11) à certains ordinateurs seulement.

Couplé avec l'identification de l'adresse MAC du premier routeur utilisé ((3) ou (6)) (déclarée par le second terminal (5) et vue de l'extérieur par le serveur interactif (8)), cette approche permet avantageusement d'éviter les fraudes liées en particulier avec l'utilisation des réseaux virtuels privés dits VPN (en anglais Virtual Private Network), c'est-à-dire, de connecter son ordinateur à un autre endroit du réseau privé (changement de routeur).

Dans un mode de réalisation, le module de reconnaissance et de transmission du serveur interactif (8) mémorise une caractéristique d'identification supplémentaire du second terminal (5) qui est le numéro de téléphone de la prise filaire. Cette possibilité permet de « fixer » d'avantage l'environnement du second terminal (5) et d'éviter les éventuelles fraudes liées au déplacement physique du second terminal (5), c'est-à-dire, le microordinateur (4) avec le routeur (3) de la zone domestique (14), par exemple, d'une ville à l'autre ou d'un appartement à un autre.

Dans un mode de réalisation, le module d'authentification du moyen serveur interactif (8) est apte à authentifier l'adresse MAC du second terminal (5) par des moyens de comparaison de l'adresse MAC reçue du second terminal (5) avec celle mémorisée dans sa base de données ainsi que l'adresse MAC reçue du routeur (6) avec celle mémorisée qui correspond à l'adresse du premier routeur (6) utilisé de même que son adresse IP. Il est connu que l'adresse IP inversée du modem (3) permet de remonter à l'offre ADSL propre à l'utilisateur du second terminal (5) et au FAI (Fournisseur d'Accès Internet) de remonter à l'adresse de prise téléphonique (@prise). Ainsi, la possibilité pour le serveur interactif (8) de contrôler l'adresse IP du second terminal de l'extérieur de la zone domestique (14) via le réseau filaire est avantageuse car elle permet de s'assurer de l'identité de l'utilisateur du second terminal (5) indépendamment de toute éventuelle intervention frauduleuse sur le second terminal (5) à l'intérieur de la zone domestique (14).

Dans un autre mode de réalisation, le module d'authentification du serveur interactif (8) est apte à authentifier la localisation géographique du premier terminal (11) via le réseau radiotéléphonique cellulaire (12) indépendamment du réseau filaire ou câblé, en identifiant une cellule de l'infrastructure du réseau radiotéléphonique GSM utilisée par le premier terminal (11) lors de, par exemple, son identification via le réseau radiotéléphonique GSM et en comparant l'emplacement géographique de cette cellule avec l'emplacement géographique de la zone domestique (14) déclarée et mémorisée préalablement dans la base de données distante de l'enregistreur de localisation nominal « HLR » (9). Il s'agit d'un moyen de contrôle supplémentaire de l'emplacement du premier terminal (11) par rapport à la zone domestique (14). Cette possibilité permet de « fixer » d'avantage l'environnement du second terminal (5) et d'éviter les éventuelles fraudes liées au déplacement physique du second terminal (5) et/ou du premier terminal (11) de la zone domestique (14), par exemple, d'une ville à une autre. En outre, cela permet de contrôler efficacement l'utilisation éventuelle des répéteurs ou des réseaux VPN autorisés par le serveur interactif (8).

En résumé, dans le cas où le second terminal (5) comprend au moins un modem ADSL (3), le système selon invention dispose avantageusement des moyens pour contrôler par le serveur interactif (8) les paramètres suivants, pris individuellement ou dans leur ensemble, à savoir :
- Adresse MAC du second terminal (5),
- Adresse MAC du premier routeur utilisé (3) ou (6)
- Adresse @prise identifiant la prise filaire utilisée (par exemple, le CLI (en anglais Calling Line Identifier) ou numéro de téléphone fixe attribué par l'opérateur du réseau téléphonique commuté, inversion de l'adresse IP vue du serveur par le FAI, etc.)

Pour ces deux configurations du second terminal (5), l'utilisation de l'ensemble de ces paramètres combinés avec la vérification de la cellule de l'infrastructure du réseau radiotéléphonique GSM (12) utilisée par le premier terminal (11) lors de son identification via le réseau radiotéléphonique GSM (12) permet de localiser très précisément et d'authentifier un équipement mobile, c'est-à-dire, le premier terminal (11) dans la zone domestique (14) du second terminal (5), à l'aide d'une boucle « environnement GSM/environnement filaire ou câblé ».

Le procédé selon l'invention pour localiser et authentifier un équipement mobile tel que le premier terminal (11) dans la zone domestique (14), mise en oeuvre par le système selon l'invention, comprend une étape préalable de déclaration et d'enregistrement des caractéristiques d'identification du premier terminal (11) et des caractéristiques d'identification du second terminal (5) dans la base de données distante de l'enregistreur de localisation nominal « HLR » (9).

Dans un mode de fonctionnement, le procédé comporte une autre étape préalable de déclaration et d'enregistrement des caractéristiques d'identification du premier terminal (11) dans le mémoire du second terminal (5) et inversement.

Ensuite, le procédé selon l'invention comprend :
- une étape de détection de la présence de l'émission radio courte portée du premier terminal (5) déclaré par une interface correspondante du module radio de courte portée du second terminal (5) dans la zone domestique (14) qui comprend une communication des caractéristiques d'identification du premier terminal (11) au second terminal (5) et inversement,
- une étape de demande par le second terminal (5) d'un identifiant à ce premier terminal (11),
- une étape de vérification par le second terminal (5) que ce premier terminal (11) est autorisé à établir une communication par le réseau de téléphonie commuté.

Dans un mode de fonctionnement, le procédé selon l'invention comprend en outre :
une étape d'ouverture d'une session de transmission de données horodatées d'identification contenant au moins une caractéristique d'identification du premier terminal (11) et au moins une caractéristique d'identification du second terminal (5) via le réseau téléphonique commuté à un serveur interactif (8) susceptible d'établir une connexion avec la base de données distante de l'enregistreur de localisation nominal « HLR » (9) du réseau de radiotéléphonie (12).

Dans un mode de fonctionnement, le procédé selon l'invention peut être complété par :
une étape d'établissement par la base de données distante (9) d'une connexion avec le serveur interactif (8) pour faire transmettre par le serveur (8) au premier terminal (11) une demande d'authentification et
une étape de réception de la réponse fournie par le terminal (11) et transmise par le serveur interactif (8) et de comparaison de cette réponse avec celle calculée par la base de données distante et
une étape de mémorisation (après authentification) d'une information horodatée (IN - OUT) dans une base de données du réseau (12) en correspondance avec les identifiants du premier terminal (11) permettant de décider s'il peut accéder ou non à certains services privilégiés et/ou au réseau téléphonique commuté.

Dans un mode de fonctionnement, le procédé selon l'invention peut être complété par :
une étape de communication de l'information horodatée (IN - OUT) au second terminal (5) pour autoriser ou non l'accès du premier terminal (11) au réseau téléphonique commuté au travers du second terminal (5).

Comme cela était déjà suggéré ci-dessus, le procédé peut comprendre l'enchaînement des étapes s'opérant successivement tous les intervalles de temps lorsque le premier terminal (11) se trouve dans la zone domestique (14).

Dans un mode de fonctionnement, le procédé selon l'invention peut remplacer l'authentification HLR par l'envoi régulier (tous les intervalles de temps) de codes secrets par voie radio (à travers le premier terminal (11)) ces codes impliquant en retour une série d'actions déterminée (fonction du code) sur la voie filaire (à travers le second terminal (5)).

Dans un mode de fonctionnement, le procédé selon l'invention peut remplacer l'authentification HLR par l'envoi régulier (tous les intervalles de temps) de codes secrets par voie filaire (à travers le second terminal (5)) ces codes impliquant en retour une série d'actions déterminée (fonction du code) sur la voie radio (à travers le premier terminal (11)).

Dans un mode de fonctionnement, le procédé selon l'invention peut être complété par :
une étape d'autorisation par le serveur interactif (8) d'accès au service privilégié pour le premier terminal (11) comportant
une étape de déclaration et de mémorisation préalable par un module de reconnaissance et de transmission du serveur interactif (8) des identifiants du premier terminal (IMSI, IMEI, MSISDN) (11) et du second terminal (IP, CLI, MAC) (5) et d'un état (IN - OUT) autorisant,
une étape de transmission de ces identifiants (IMSI, IMEI, IP, CLI, MSISDN, MAC) du premier (11) et du second (5) terminal au serveur interactif (8) lors de la session de transmission de données horodatées via le réseau filaire ou câblé, et
une étape de mise à jour des données et de l'état (IN - OUT) de l'information mémorisée en correspondance avec les identifiants du premier terminal (11) par le serveur interactif (8) pour autoriser l'accès au service privilégié du premier terminal (11).

Dans un mode de fonctionnement, l'étape d'autorisation par le serveur interactif (8) d'accès aux services privilégiés pour le premier terminal (11) peut être complété par
une étape de déclaration et de mémorisation préalable par un module de reconnaissance et de transmission du serveur interactif (8) des identifiants du premier terminal constitués de l'adresse dite adresse MAC du premier routeur (6), et
une étape de transmission par le second terminal (5) de cet identifiant au serveur interactif (8) lors de la session de transmission de données horodatées via le réseau filaire ou câblé, et
une étape de vérification des données par le serveur interactif (8) avant d'autoriser l'accès au service privilégié du premier terminal (11).

Il doit être évident pour les personnes versées dans l'art que la présente invention permet des modes de réalisation sous de nombreuses autres formes spécifiques sans l'éloigner du domaine d'application de l'invention comme revendiqué. Notamment, bien que l'invention ait été illustrée par un exemple où le premier routeur (6) est disposé hors de la zone domestique (14), on comprendra que l'invention puisse également être utilisée dans une configuration du réseau filaire où le premier routeur (6) se situe dans la zone domestique (14), y compris lors qu'il est solidaire du second terminal (5).

De même, bien que l'invention ait été illustrée par un exemple d'un système utilisant deux routeurs (6, 7), on comprendra que l'invention puisse également être utilisée dans une configuration du réseau filaire comprenant un seul routeur (6) ou une multitude de routeurs.

En outre, bien que l'invention ait été illustrée par un exemple d'un système où la liaison entre le premier (11) et le second (5) terminal est assurée sans aucun répéteur par le module radio muni d'une technologie de transmission de courte portée de type Bluetooth, on comprendra que l'invention puisse également être utilisée dans une configuration comprenant au moins un répéteur.

Egalement, bien que l'invention ait été illustrée par un exemple d'un système utilisant un seul terminal Bluetooth déclaré, on comprendra que l'invention puisse également être utilisée dans une configuration comprenant une multitude de terminaux du type premier terminal (11) déclarés ou pas.

De même, bien que l'invention ait été illustrée par un exemple d'une technologie de transmission radio de courte portée du type Bluetooth, on comprendra que l'invention puisse également utiliser toute autre technologie de transmission radio de courte portée.

Enfin, bien que l'invention ait été illustrée par un exemple d'un réseau radiotéléphonique cellulaire conforme au standard européen du système radio cellulaire numérique GSM, on comprendra que l'invention puisse également être utilisée dans une configuration comprenant un réseau radiotéléphonique cellulaire numérique conforme à n'importe quel autre standard convenu pour les systèmes radio cellulaires numériques et analogiques.

## Revendications

1. Système pour localiser et authentifier un équipement mobile (11) dans une zone déterminée dite domestique (14), comprenant :
- au moins un premier terminal (11) de communication radiotéléphonique cellulaire muni d'un objet essentiellement électronique à microcircuit et mémoire (0) pour contenir l'ensemble des caractéristiques de l'abonnement y compris l'identité de l'abonné (IMSI, IMEI), ledit premier terminal (11) pouvant communiquer, dans un réseau (12) de radiotéléphonie identifiable par des moyens du réseau, avec d'autres terminaux identifiés dans une base de données distante (9) mémorisée dans un équipement enregistreur de localisation nominal « HLR » qui contient les profils des abonnés, leurs identifiants et leur localisation approximative,
- au moins un second terminal (5),
le premier terminal (11) comportant un module radio utilisant une technologie de courte portée (quelques dizaines de mètres) pour communiquer sans fil dans la zone dite domestique (14) avec ledit second terminal (5), le second terminal (5) étant doté d'un module radio utilisant cette technologie et doté d'une liaison par fil ou câble avec un second réseau de téléphonie commuté, ce second terminal (5) comportant une interface pour détecter la présence de l'émission courte portée du premier terminal (11), des moyens pour demander un identifiant à ce premier terminal (11), **caractérisé en ce que** les moyens du second terminal (5) pour demander une identification comprennent :
- un module de reconnaissance et de transmission apte à réaliser une identification du premier terminal (11) déclaré venant d'être détecté par le module radio du second terminal (5) dans la zone domestique (14) et
- des moyens pour ouvrir une session de transmission de données horodatées d'identification, contenant au moins une caractéristique d'identification du premier terminal (11) et au moins une caractéristique d'identification du second terminal (5),
les données horodatées d'identification étant transmises via le réseau téléphonique commuté à un moyen serveur interactif (8) susceptible d'établir une connexion avec la base de données distante de l'enregistreur de localisation nominal « HLR » (9) du réseau de radiotéléphonie (12), le moyen serveur interactif (8) incluant des moyens d'autorisation d'un accès pour le premier terminal (11) à des services privilégiés de l'opérateur de radiotéléphonie via la voie radio ou via le réseau téléphonique commuté, les moyens d'autorisation étant agencés pour authentifier des données reçues lors de la session de transmission des données horodatées d'identification.

2. Système selon la revendication 1, dans lequel un module du moyen serveur interactif (8) réalise une déclaration et une mémorisation préalable des identifiants du premier terminal (IMSI, IMEI, MSISDN) (11), du second terminal (IP, @prise, MAC) (5), éventuellement du premier routeur utilisé (MAC) (6) et d'un état (IN - OUT) autorisant, ces identifiants (IMSI, IMEI, MSISDN, IP, @prise, MAC(5), MAC(6)) étant transmis au moyen serveur interactif (8) lors de la session de transmission de données horodatées via le réseau filaire ou câblé,
le moyen serveur interactif (8) déclenchant une vérification, avant d'autoriser l'accès aux services privilégiés du premier terminal (11), des données et de l'état (IN - OUT) de l'information mémorisée en correspondance avec les identifiants du premier terminal (11).

3. Système selon l'une des revendications 1 à 2, **caractérisé en ce que**
la base de données distante (9) comporte des moyens pour établir une connexion avec le serveur (8) pour faire transmettre par le serveur (8) au premier terminal (11) une demande d'authentification et
des moyens pour recevoir la réponse fournie par le terminal (11) et transmise par le serveur (8) et pour comparer cette réponse avec celle calculée par la base de données distante.

4. Système selon l'une des revendications 1 à 3, **caractérisé en ce que**
le serveur (8) comporte des moyens pour mémoriser à la fin de la procédure d'authentification une information horodatée permettant au moyen serveur interactif de statuer sur l'état (IN-OUT) du premier terminal (11), cet état étant mémorisé dans une base de données du moyen serveur interactif (8) ou du réseau en correspondance avec les identifiants du premier terminal (11) permettant à l'opérateur de radiotéléphonie de décider si le premier terminal (11) peut accéder ou non à certains services privilégiés de l'opérateur de radiotéléphonie et/ou au réseau téléphonique commuté.

5. Système selon l'une des revendications 1 à 4, **caractérisé en ce que**
le serveur (8) comporte des moyens de communiquer l'information (IN - OUT) au second terminal (5) pour autoriser ou non l'accès du premier terminal (11) aux services privilégiés du réseau de radiotéléphonie et/ou au réseau téléphonique commuté au travers du second terminal (5).

6. Système selon l'une des revendications 1 à 5 **caractérisé en ce que** le serveur (8) comporte des moyens pour communiquer l'information (IN - OUT) au premier terminal (11) pour permettre à l'utilisateur de savoir qu'il est autorisé à accéder aux services privilégiés du réseau de radiotéléphonie et/ou au réseau téléphonique commuté au travers du second terminal (5).

7. Système selon l'une des revendications 1 à 6, **caractérisé en ce que** le premier terminal (11) est doté d'un module de commutation apte à orienter les flux de données ou de paroles générés lors de la communication téléphonique de l'environnement radiotéléphonique cellulaire (12) du premier terminal (11) vers l'environnement filaire ou câblé du second terminal (5) à travers le module radio de courte portée,
et **en ce que** le second terminal (5) est doté d'un module de dialogue gérant la réception et la transmission des flux d'information et/ou de données générés par la communication téléphonique entre, d'une part, les deux terminaux (11, 5) et, d'autre part, le réseau téléphonique commuté, et
**en ce que** le moyen serveur interactif (8) comprend une interface téléphonie pour supporter les flux d'information et/ou de données générés lors de la demande d'authentification du terminal (11).

8. Système selon l'une des revendications 1 à 7, **caractérisé en ce que** le premier terminal (11) est identifiable par le second terminal (5) par la communication de son IMSI, de son MSISDN, de son IMEI, du résultat d'une fonction utilisant ces paramètres ou de tout autre paramètre connu du second terminal (5) et identifiant le premier terminal (11).

9. Système selon l'une des revendications 1 à 8, **caractérisé en ce que** la caractéristique d'identification du second terminal (5) identifiable par le module de reconnaissance et de transmission est un identifiant d'adresse de prise transmise par un fournisseur d'accès physique tiers.

10. Système selon l'une des revendications 1 à 9, **caractérisé en ce que** le second terminal (5) est un moyen modem (3), notamment du type boîtier ADSL connecté au réseau filaire ou câblé et identifiable par des moyens d'identification du réseau parmi d'autres terminaux connectés sur le réseau via une adresse de prise dite adresse IP du moyen modem (3) qui caractérise de manière unique le moyen modem (3), et
**en ce que** l'adresse de prise du second terminal (5) est déclarée et mémorisée préalablement dans une base de données du serveur (8) autorisant l'accès au service privilégié pour le téléphone cellulaire (1).

11. Système selon la revendication 10 **caractérisé en ce que** le moyen modem (3) connecté au réseau téléphonique commuté est relié à un moyen ordinateur personnel (4) et
**en ce que** le moyen ordinateur personnel (4) est doté d'une application de reconnaissance et de transmission.

12. Système selon l'une des revendications 10 à 11, **caractérisé en ce que** le module de reconnaissance et de transmission du moyen serveur interactif (8) mémorise l'identifiant du premier terminal (IMSI, IMEI, MSISDN) (11) et du second terminal (IP, @prise) (5) et une deuxième caractéristique d'identification du second terminal (5) constituée de l'adresse dite adresse MAC du second terminal (5) et,
le second terminal comporte des moyens pour transmettre cette adresse MAC du second terminal (5) lors de la session de transmission de données horodatées via le réseau filaire ou câblé du second terminal (5) au moyen serveur interactif (8), et
**en ce que** l'adresse MAC du second terminal (5) est déclarée et mémorisée préalablement dans la base du moyen serveur interactif (8) pour permettre la vérification des données avant d'authentifier l'accès au service privilégié.

13. Système selon l'une des revendications 10 à 12, **caractérisé en ce que** le module de reconnaissance et de transmission du moyen serveur interactif (8) mémorise une caractéristique d'identification du premier terminal (11) constituée de l'adresse dite adresse MAC du premier routeur (6).

14. Système selon l'une des revendications 10 à 13, **caractérisé en ce que** le module d'authentification du moyen serveur interactif (8) est apte à authentifier l'adresse de prise du second terminal (5) par des moyens pour comparer l'adresse de prise reçue du second terminal (5) avec celle mémorisée dans sa base de données
l'adresse MAC reçue du second terminal (5) avec celle mémorisée dans sa base de données,
ainsi que l'adresse MAC reçue du routeur (6) avec celle mémorisée qui correspond à l'adresse du premier routeur (6) utilisé.

15. Système selon la revendication 14, **caractérisé en ce qu'**il s'interface avec un opérateur tiers pour demander la fourniture de la correspondance entre les adresses IP et les adresses physiques ou adresses de prise géographiques.

16. Système selon l'une des revendications 1 à 15, **caractérisé en ce que** le premier terminal (11) comporte des moyens pour détecter une communication par moyen radio de courte portée avec le second terminal (5) et de demander ou non à l'utilisateur s'il veut utiliser une communication avant d'autoriser la procédure d'identification vis-à-vis du second terminal (5) et d'authentification vis-à-vis du réseau.

17. Système selon l'une des revendications 1 à 16, **caractérisé en ce que** le second terminal (5) comporte des moyens pour mettre le premier terminal (11) en mode autonome « hors zone domestique (14) » en mettant une information qui fait basculer le premier terminal (11) sur l'utilisation exclusive ou une utilisation avec moins de privilèges d'accès aux services, de la liaison radiotéléphonique.

18. Procédé pour localiser et authentifier un équipement mobile (11) dans une zone déterminée dite domestique (14), mis en oeuvre par le système selon la revendication 1, comprenant une étape préalable de déclaration et d'enregistrement des caractéristiques d'identification du premier terminal (11) et des caractéristiques d'identification du second terminal (5) et des caractéristiques d'identification disponibles du premier routeur utilisé dans une base de données distante (9) et une autre étape préalable de déclaration et d'enregistrement des caractéristiques d'identification du premier terminal (11) dans le moyen mémoire du second terminal (5), une étape de détection pour détecter la présence d'une émission radio courte portée du premier terminal (5) déclaré étant réalisée dans la zone domestique (14) par une interface correspondante du module radio de courte portée du second terminal (5), le procédé étant **caractérisé en ce qu'**il comporte
lors de l'étape de détection, une communication des caractéristiques d'identification du premier terminal (11) au second terminal (5),
une étape de demande par le second terminal (5) d'un identifiant à ce premier terminal (11),
une étape de vérification par le second terminal (5) pour vérifier que ce premier terminal (11) est autorisé à établir une communication par le réseau de téléphonie commuté, l'étape de vérification comprenant l'envoi par le second terminal (5) d'une caractéristique d'identification du premier terminal (11) et d'au moins une caractéristique d'identification du second terminal (5), via le réseau téléphonique commuté à un moyen serveur interactif (8) pouvant se connecter avec la base de données distante (9), cette base de données distante (9) étant mémorisée dans un équipement enregistreur de localisation nominal « HLR » du réseau (12) de radiotéléphonie auprès duquel ledit premier terminal (11) est enregistré, et
une étape d'autorisation réalisée par des moyens d'autorisation du moyen serveur interactif (8) pour autoriser au premier terminal (11) l'accès à des services privilégiés de l'opérateur de radiotéléphonie via la voie radio ou via le réseau téléphonique commuté, les moyens d'autorisation étant agencés pour authentifier des données reçues lors de la session de transmission des données horodatées d'identification.

19. Procédé selon la revendication 18, **caractérisé en ce qu'**il comprend une étape de transmission, par exemple au moyen d'un SMS, de la part du serveur interactif (8) vers le premier terminal (11) par la voie radio (15 et 16) d'un code en fonction duquel le premier terminal (11) va commander au second terminal (5) d'exécuter une série d'actions au sein du réseau de radiotéléphonie cellulaire.

20. Procédé selon la revendication 18, **caractérisé en ce qu'**il comprend une étape de transmission de la part du serveur interactif (8) vers le second terminal (5) par le réseau de téléphonie commuté d'un code en fonction duquel le second terminal (5) va commander au premier terminal (11) d'exécuter une série d'action au sein du réseau radiotéléphonique cellulaire (12) par la voie radio (15 et 16), par exemple envoi d'informations par SMS en fonction du code.

21. Procédé selon l'une des revendications 18 à 20, **caractérisé en ce qu'**il comprend une étape d'ouverture d'une session de transmission de données horodatées d'identification contenant au moins une caractéristique d'identification du premier terminal (11) et au moins une caractéristique d'identification du second terminal (5) via le réseau téléphonique commuté à un moyen serveur interactif (8) susceptible d'établir une connexion avec la base de données distante (9) du réseau de radiotéléphonie (12).

22. Procédé selon l'une des revendications 18 à 21, **caractérisé en ce qu'**il comprend :
- une étape d'établissement par le moyen serveur interactif (8) d'une connexion avec la base de données distante (9) pour faire transmettre par le moyen serveur interactif (8) au premier terminal (11) une demande d'authentification ;
- une étape de réception de la réponse fournie par le terminal (11) et transmise par le moyen serveur interactif (8) et de comparaison de cette réponse avec celle calculée par la base de données distante ; et
- une étape de mémorisation par le serveur interactif (8) d'une information horodatée (IN - OUT) dans une base de données en correspondance avec les identifiants du premier terminal (11) permettant de déterminer que le premier terminal (11) est ou non dans la zone prédéterminée dite domestique (14) et de décider que le premier terminal peut ou non accéder à des services privilégiés de l'opérateur de radiotéléphonie via la voie radio ou via le réseau téléphonique commuté.

23. Procédé selon la revendication 22, **caractérisé en ce qu'**il comprend une étape d'envoi de codes à travers le réseau filaire qui génère une série d'actions à travers le réseau radio ou inversement.

24. Procédé selon la revendication 23, **caractérisé en ce qu'**il comprend une étape de communication de l'information horodatée (IN - OUT) au second terminal (5) pour autoriser ou non l'accès du premier terminal (11) à des services privilégiés de l'opérateur de radiotéléphonie via la voie radio ou via le réseau téléphonique commuté au travers du second terminal (5).

25. Procédé selon l'une des revendications 22 à 24, **caractérisé en ce que**l'étape d'autorisation par le moyen serveur interactif (8) d'accès au service privilégié pour le premier terminal (11), comportant :
- une étape de déclaration et de mémorisation préalable par un module de reconnaissance et de transmission du moyen serveur interactif (8) des identifiants du premier terminal (IMSI, IMEI, MSISDN) (11), du second terminal (IP, @prise, MAC) (5), éventuellement du premier routeur utilisé (MAC) (6) et d'un état (IN - OUT) autorisant ;
- une étape de transmission de ces identifiants (IMSI, IMEI, MSISDN, IP, @prise, MAC(5), MAC(6)) du premier (11), et du second (5) terminal et du premier routeur utilisé au moyen serveur interactif (8) lors de la session de transmission de données horodatées via le réseau filaire ou câblé ; et
- une étape de vérification des données et de l'état (IN - OUT) de l'information mémorisée en correspondance avec les identifiants du premier terminal (11) par le moyen serveur interactif (8) avant d'autoriser l'accès aux services privilégiés du premier terminal (11).

26. Procédé selon la revendication 25, **caractérisé en ce que** l'étape d'autorisation par le moyen serveur interactif (8) d'accès au service privilégié pour le premier terminal (11) comprend :
- une étape de déclaration et de mémorisation préalable par un module de reconnaissance et de transmission du moyen serveur interactif (8) des identifiants du premier terminal constitués de l'adresse dite adresse MAC du premier routeur (6) ;
- une étape de transmission par le second terminal (5) de cet identifiant au moyen serveur interactif (8) lors de la session de transmission de données horodatées via le réseau filaire ou câblé ; et
- une étape de vérification des données par le moyen serveur interactif (8) avant d'authentifier l'accès au service privilégié du premier terminal (11).

## Claims

1. A system for localizing and authenticating a mobile piece of equipment (11) in a determined so-called home area (14), comprising:
- at least one first cellular radiotelephone communications terminal provided with an essentially electronic object with a microcircuit and memory (0) for containing the whole of the characteristics of the subscription including the identity of the subscriber (IMSI, IMEI), said first terminal (11) being able to communicate in a radiotelephone network (12) identifiable by means of the network, with other terminals identified in a remote database (9) stored in memory in a piece of equipment registering the nominal localization, the HLR (Home Location Register), which contains the profiles of the subscribers, their identifiers and their approximate localization,
- at least one second terminal (5),
the first terminal (11) including a radio module using a short range (a few tens of meters) technology for wireless communications in the so-called home area (14) with said second terminal (5), the second terminal (5) being provided with a radio module using this technology and provided with a wire or cable link with a second switched telephone network, this second terminal (5) induing an interface for detecting the presence of the short range emission from the first terminal (11), means for requesting an identifier from this first terminal (11), **characterized in that** the means of the second terminal (5) for requesting an identification comprise:
- a recognition and transmission module capable of achieving identification of the first declare terminal (11), which has just been detected by the radio module of the second terminal (5) in the home area (14) and
- means for opening a session for transmitting time-stamped identification data, containing at least one identification characteristic of the first terminal (11) and at least one identification characteristic of the second terminal (5),
the time-stamped identification data being transmitted via the switched telephone network to an interactive server means (8) capable of establishing a connection with the remote database of the home location register HLR (9) of the radiotelephone network (12), the interactive server means (8) including means for authorizing access for the first terminal (11) to special services of the radiotelephone operator via the radio route or the switched telephone network, the authorization means being laid out so as to authenticate the data received during the session for transmitting time-stamped identification data.

2. The system according to claim 1, wherein a module of the interactive server means (8) performs a declaration and preliminary storage In memory of the identifiers of the first terminal (IMSI, IMEI, MSISDN) (11), of the second terminal (IP, @socket, MAC) (5), optionally of the first router used (MAC) (6) and of an authorizing state (IN - OUT), these identifiers (IMSI, IMEI, MSISDN, IP, @socket, MAC(5), MAC(6)) being transmitted to the interactive server means (8) during the session for transmitting time-stamped data via the wired or cabled network,
the interactive server means (8) triggering a verification, before authorizing access to the special services of the first terminal (11), of data and of the state (IN - OUT) of the information stored in memory matching the identifiers of the first terminal (11).

3. The system according to one of claims 1 to 2, **characterized in that**
the remote database (9) include means for establishing a connection with the server (8) in order to have the server (8) transmit an authentication request to the first terminal (11) and
means for receiving the response provided by the terminal (11) and transmitted by the server (8) and for comparing this response with the one calculated by the remote database.

4. The system according to one of claims 1 to 3, **characterized in that**
the server (8) includes means for storing in memory at the end of the authentication procedure, a piece of time-stamped information allowing the interactive server means to rule on the state (IN - OUT) of the first terminal (11), this state being stored in memory, in a database of the interactive server means (8) or of the network matching the identifiers of the first terminal (11) allowing the radiotelephone operator to decide whether the first terminal (11) may access certain special services of the radiotelephone operator and/or the switched telephone network or not.

5. The system according to one of claims 1 to 4, **characterized in that**
the server (8) includes means for communicating the (IN - OUT) information to the second terminal (5) in order to authorize or not access of the first terminal (11) to the special services of the radiotelephone network and/or to the switched telephone network through the second terminal (5).

6. The system according to one of claims 1 to 5, **characterized in that** the server (8) includes means for communicating the (IN - OUT) information to the first terminal (11) so that the user may know whether he/she is authorized to access the special services of the radiotelephone network and/or the switched telephone network through the second terminal (5).

7. The system according to one of claims 1 to 6, **characterized in that** the first terminal (11) is provided with a switching module capable of orienting the data or voice data flows generated during the telephone communication from the cellular radiotelephone environment (12) of the first terminal (11) towards the wired or cabled environment of the second terminal (5) through the short range radio module,
and **in that** the second terminal (5) is provided with a dialogue module handling the reception and transmission of the information and/or data flows generated by the telephone communication between both terminals (11, 5) on the one hand, and the switched telephone network on the other hand, and
**in that** the interactive server means (8) comprises a telephone interface for supporting the information and/or data flows generated upon requesting authentication of the terminal (11).

8. The system according to one of claims 1 to 7, **characterized in that** the first terminal (11) is identifiable by the second terminal (5) by the communication of its IMSI, of its MSISDN, of its IMEI, of the results of a function using these parameters or any other known parameter of the second terminal (5) and identifying the first terminal (11).

9. The system according to one of claims 1 to 8, **characterized in that** the identification characteristic of the second terminal (5) identifiable by the recognition and transmission module is an identifier of a socket address transmitted by a third party physical access provide.

10. The system according to one of claims 1 to 9, **characterized in that** the second terminal (5) is a modem means (3), notably of the ADSL box type connected to the wired or cabled network and identifiable by identification means of the network from other terminals connected on the network via a socket address, a so-called IP address, of the modem means (3) which characterizes the modem means (3) in a unique way, and
**in that** the socket address of the second terminal (5) is declared and stored in memory beforehand in a database of the server (8) authorizing access to the special service for the cellular telephone (1).

11. The system according to claim 10, **characterized in that** the modem means (3) connected to the switched telephone network is connected to a personal computer means (4) and
**in that** the personal computer means (4) is provided with a recognition and transmission application.

12. The system according to one of claims 10 to 11, **characterized in that** the recognition and transmission module of the interactive server means (8) stores in memory the identifier of the first terminal (IMSI, IMEI, MSISDN) (11) and of the second terminal (IP, @socket) (5) and a second identification characteristic of the second terminal (5) consisting of the address, a so-called MAC address, of the second terminal (5) and,
the second terminal includes means for transmitting this MAC address of the second terminal (5), during the session for transmitting time-stamped data via the wired or cabled network from the second terminal (5) to the interactive server means (8), and
**in that** the MAC address of the second terminal (5) is declared and stored in memory beforehand in the base of the interactive server means (8) in order to allow verification of the data before authenticating access to the special service.

13. The system according to one of claims 10 to 12, **characterized in that** the recognition and transmission module of the interactive server means (8) stores in memory an identification characteristic of the first terminal (11) consisting of the address, a so-called MAC address, of the first router (6).

14. The system according to one of claims 10 to 13, **characterized in that** the authentication module of the interactive server means (8) is capable of authenticating the socket address of the second terminal (5) by means for comparing the socket address received from the second terminal (5) with the one stored in memory, in its database,
the MAC address received from the second terminal (5) with the one stored in memory, in its database,
as well as the MAC address received from the router (6) with the one stored in memory, which corresponds to the address of the first router (6) used.

15. The system according to claim 14, **characterized in that** it is interfaced with a third party operator in order to request that the match between the IP addresses and the physical addresses or geographical socket addresses be provided.

16. The system according to one of claims 1 to 15, **characterized in that** the first terminal (11) includes means for detecting a communication by a short range radio means with the second terminal (5) and asking the user whether his/her intention is to use a communication or not before authorizing the procedure for identification with respect to the second terminal (5) and for authentication with respect to the network.

17. The system according to one of claims 1 to 16, **characterized in that** the second terminal (5) includes means for setting the first terminal in a standalone mode "out of the home area (14)" by putting a piece of information which switches the first terminal (11) to the exclusive use, or a use with less privileges for accessing the services, of the radiotelephone link.

18. A method for vocalizing and authenticating a mobile piece of equipment (11) in a determined so-called home area (14) applied by the system according to claim 1, comprising a preliminary step for declaring and registering the identification characteristics of the first terminal (11) and the identification characteristics of the second terminal (5) and the available identification characteristics of the first router used in a remote database (9) and another preliminary step for declaring and registering the identification characteristics of the first terminal (11) in the memory means of the second terminal (5), a detection step for detecting the presence of the a short range radio emission from the first declared terminal (5) being performed in the home area (14) by a corresponding interface of the short range radio module of the second terminal (5), the method being **characterized in that** it includes
during the detection step, communication of the identification characteristics of the first terminal (11) to the second terminal (5),
a step for having the second terminal (5) request an identifier from this first terminal (11),
a verification step by the second terminal (5) in order to verify that this first terminal (11) is authorized to establish a communication through the switched telephone network, the verification step comprising the sending by the second terminal (5) of an identification characteristic of the first terminal (11) and of at least one identification characteristic of the second terminal (5), via the switched telephone network to an interactive server means (8) which may connect with the remote database (9), this remote database (9) being stored in memory, in a home location register HLR (9) of the radiotelephone network (12) at which said first terminal (11) is registered, and
an authorization step performed by authorization means of the interactive server means (8) for authorizing the first terminal (11) to access special services of the radiotelephone operator via the radio route or via the switched telephone network, the authorization means being laid out so as to authenticate received data during the session for transmitting time-stamped identification data.

19. The method according to claim 18, **characterized in that** it comprises a step for transmission, for example by means of an SMS message, on behalf of the interactive server (8), to the first terminal (11) via the radio route (15 and 16), of a code according to which the first terminal (11) will order that the second terminal (5) execute a series of actions within the cellular radiotelephone network.

20. The method according to claim 18, **characterized in that** it comprises a step for transmission on behalf of the interactive server (8) to the second terminal (5) by the switched telephone network, of a code according to which the second terminal (5) will order that the first terminal (11) execute a series of actions within the cellular radio telephone network (12) via the radio route (15 and 16), for example sending pieces of information by SMS message according to the code.

21. The method according to one of claims 18 to 20, **characterized in that** it comprises a step for opening a session for transmitting time-stamped identification data containing at least one identification characteristic of the first terminal (11) and at least one identification characteristic of the second terminal (5) via the switched telephone network to an interactive server means (8) capable of establishing a connection with the remote database (9) of the radiotelephone network (12).

22. The method according to one of claim 18 to 21, **characterized in that** it comprises:
- a step for having the interactive server means (8) establish a connection with the remote database (9) in order to have the interactive server means (8) transmit an authentication request to the first terminal (11);
- a step for receiving the response provided by the terminal (11) and transmitted by the interactive server means (8) and for comparing this response with the one calculated by the remote database; and
- a step for having the interactive server (8) store in memory a piece of time-stamped information (IN - OUT) in a database matching the identifiers of the first terminal (11) with which it is possible to determine whether the first terminal (11) is in the predetermined so-called home area (14) or not, and to decide whether the first terminal may access special services of the radiotelephone operator via the radio route or via the switched telephone network or not.

23. The method according to claim 22, **characterized in that** it comprises a step for sending codes through the wired network, which generates a series of actions through the radio network or vice versa.

24. The method according to claim 23, **characterized in that** it comprises a step for communicating the time-stamped information (IN - OUT) to the second terminal (5) in order to authorize or not the first terminal (11) to access special services of the radiotelephone operator via the radio route or via the switched telephone network through the second terminal (5).

25. The method according to one of claims 22 to 24, **characterized in that** the step for having the interactive server means (8) authorize access to the special service for the first terminal (11), including:
- a step for preliminary declaration and storage in memory by a recognition and transmission module of the interactive server means (8), of the identifiers of the first terminal (IMSI, IMEI, MSISDN) (11), of the second terminal (IP, @socket, MAC) (5), optionally of the first router used (MAC) (6) and of a state (IN - OUT) authorizing;
- a step for transmitting these identifiers (IMSI, IMEI, MSISDN, IP, @socket, MAC(5), MAC(6)) of the first (11) and of the second (5) terminal and of the first router used, to the interactive server means (8) during the session for transmitting time-stamped data via the wired or cabled network; and
- a step for having the interactive server means (8) verify the data and the state (IN - OUT) of the information stored in memory matching the identifiers of the first terminal (11), before authorizing access of the first terminal (11) to the special services.

26. The method according to claim 25, **characterized in that** the step for having the interactive server means (8) authorize access to the special service for the first terminal (11) comprises:
- a step for preliminary declaration and storage in memory by a recognition and transmission module of the interactive server means (8) of the identifiers of the first terminal consisting of the address, the so-called MAC address, of the first router (6);
- a step for having the second terminal (5) transmit this identifier to the interactive server means (8) during the session for transmitting time-stamped data via the wired or cabled network; and
- a step for having the interactive server means (8) verify the data before authorizing access of the first terminal (11) to the special service.

## Patentansprüche

1. System zur Lokalisierung und Authentifizierung einer mobilen Ausrüstung (11) in einer bestimmten, sogenannten Heimzone (14), das umfasst:
- mindestens ein erstes Endgerät (11) zur mobilen Funktelefonkommunikation, das mit einem im Wesentlichen elektronischen Objekt, das mit Mikrochip und Speicher (0) ausgestattet ist, um alle Merkmale des Abonnements inkl. der Identität des Abonnenten (IMSI, IMEI) zu enthalten, ausgestattet ist, wobei das erste Endgerät (11) in einem Funktelefonnetz (12), das durch Netzmittel identifizierbar ist, mit anderen Endgeräten, die in einer entfernten Datenbank (9) identifiziert sind, die in einer Heimatregistereinrichtung "HLR" gespeichert ist, kommunizieren kann, das die Profile der Abonnenten, ihre Anschlusskennungen und ihre ungefähre Lokalisierung enthält,
- mindestens ein zweites Endgerät (5),
wobei das erste Endgerät (11) ein Funkmodul aufweist, das eine Nahfunktechnologie (einige Dutzend Meter) verwendet, um drahtlos in der sogenannten Heimzone (14) mit dem zweiten Endgerät (5) zu kommunizieren, wobei das zweite Endgerät (5) mit einem Funkmodul ausgestattet ist, das diese Technologie verwendet und mit einer drahtgebundenen oder Kabelverbindung mit einem zweiten Wählnetz ausgestattet ist, wobei dieses zweite Endgerät (5) eine Schnittstelle aufweist, um die Anwesenheit der Strahlung kurzer Reichweite des ersten Endgeräts (11) zu orten, Mittel, um eine Anschlusskennung von diesem ersten Endgerät (11) anzufordern, **dadurch gekennzeichnet, dass** die Mittel des zweiten Endgeräts (5) zur Anforderung einer Identifikation umfassen:
- ein Erkennungs- und Überkrsgungsmodul, das imstande ist, eine Identifikation des angemeldeten ersten Endgeräts (11), das vom Funkmodul des zweiten Endgerät (5) in der Heimzone (14) ermittelt wurde, durchzuführen und
- Mittel, um eine Sitzung zur Übertragung von Identifikationsdaten mit Zeitstempel zu eröffnen, die mindestens ein Identifikationsmerkmal des ersten Endgeräts (11) und mindestens ein Identifikationsmerkmal des zweiten Endgeräts (5) enthalten,
wobei die Identifikationsdaten mit Zeitstempel über das Wählnetz an ein interaktives Servermittel (8) übertragen werden, das imstande ist, eine Verbindung mit der entfernten Datenbank des Heimatregisters "HLR" (9) des Funktelefonnetzes (12) herzustellen, wobei das interaktive Servermittel (8) Genehmigungsmittel eines Zugriffs für das erste Endgerät (11) auf privilegierte Services des Funktelefonbetreibers über den Funkweg oder über das Wählnetz einschließt, wobei die Genehmigungsmittel ausgebildet sind, um während der Sitzung zur Übertragung von Identifikationsdaten mit Zeitstempel erhaltene Daten zu authentifizieren.

2. System nach Anspruch 1, in dem ein Modul des interaktiven Servermittels (8) eine Anmeldung und eine vorherige Speicherung der Anschlusskennungen des ersten Endgeräts (IMSI, IMEI, MSISDN) (11), des zweiten Endgeräts (IP, @prise, MAC) (5), eventuell des ersten verwendeten Routers (MAC) (6) und eines Genehmigungszustands (IN - OUT) durchführt, wobei diese Anschlusskennungen (IMSI, IMEI, MSISDN, IP, @prise, MAC(5), MAC(6)) mit dem interaktiven Servermittel (8) während der Sitzung zur Übertragung von Daten mit Zeitfenster über das drahtgebundene oder Kabelnetz übertragen werden,
wobei das interaktive Servermittel (8) vor Genehmigung des Zugriffs auf privilegierte Services des ersten Endgeräts (11) eine Überprüfung der Daten und des Zustands (IN - OUT) der gespeicherten Information in Übereinstimmung mit den Anschlusskennungen des ersten Endgeräts (11) auslöst.

3. System nach einem der Ansprüche 1 bis 2, **dadurch gekennzeichnet, dass**
die entfernte Datenbank (9) Mittel aufweist, um eine Verbindung mit dem Server (8) aufzubauen, damit durch den Server (8) an das erste Endgerät (11) eine Authentifizierungsanforderung übertragen wird, und
Mittel, um die vom Endgerät (11) gelieferte und vom Server (8) übertragene Antwort zu empfangen und um diese Antwort mit der von der entfernten Datenbank errechneten Antwort zu vergleichen.

4. System nach einem der Ansprüche 1 bis 3, **dadurch gekennzeichnet, dass**
der Server (8) Mittel aufweist, um am Ende des Authentifizierungsvorgangs eine Information mit Zeitfenster zu speichern, die es dem interaktiven Servermittel genehmigt, über den Zustand (IN-OUT) des ersten Endgeräts (11) zu befinden, wobei dieser Zustand in einer Datenbank des interaktiven Servermittels (8) oder des Netzes in Übereinstimmung mit den Anschlusskennungen des ersten Endgeräts (11) gespeichert wird, so dass der Funktelefonbetreiber entscheiden kann, ob das erste Endgerät (11) auf bestimmte privilegierte Services des Funktelefonbetreibers und/oder auf das Wählnetz zugreifen darf oder nicht.

5. System nach einem der Ansprüche 1 bis 4, **dadurch gekennzeichnet, dass**
wobei der Server (8) Mittel aufweist, um die Information (IN - OUT) dem zweiten Endgerät (5) zu kommunizieren, um den Zugriff des ersten Endgeräts (11) auf die privilegierten Services des Funktelefonnetzes und/oder auf das Wählnetz über das zweite Endgerät (5) zu genehmigen oder nicht.

6. System nach einem der Ansprüche 1 bis 5, wobei der Server (8) Mittel aufweist, um die Information (IN - OUT) dem ersten Endgerät (11) zu kommunizieren, um dem Benutzer zu genehmigen zu wissen, ob er auf die privilegierten Services des Funktelefonnetzes und/oder auf das Wählnetz über das zweite Endgerät (5) zugreifen darf oder nicht.

7. System nach einem der Ansprüche 1 bis 6, **dadurch gekennzeichnet, dass** das erste Endgerät (11) mit einem Umschaltmodul ausgerüstet ist, das imstande ist, die während der telefonischen Kommunikation erzeugten Daten- oder Wortflüsse von der Mobiltelefonumgebung (12) des ersten Endgeräts (11) über das Nahfunk-Funkmodul zur drahtgebundenen oder verkabelten Umgebung des zweiten Endgeräts (5) zu lenken,
und dass das zweite Endgerät (5) mit einem Dialogmodul ausgestattet ist, das den Empfang und die Übertragung der von der telefonischen Kommunikation erzeugten Information- und/oder Datenflüsse zwischen einerseits den zwei Endgeräten (11, 5) und andererseits dem Wählnetz erzeugt, und
dass das interaktive Servermittel (8) eine Telefonieschnittstelle umfasst, um die bei der Authentifizierungsanforderung des Endgeräts (11) erzeugten Informations- und/oder Datenflüsse zu unterstützen.

8. System nach einem der Ansprüche 1 bis 7, **dadurch gekennzeichnet, dass** das erste Endgerät (11) durch das zweite Endgerät (5) durch die Kommunikation seines IMSI, seines MSISDN, seines IMEI, des Ergebnisses einer Funktion, die diese Parameter verwendet oder jeden anderen Parameter, der dem zweiten Endgerät (5) bekannt ist und das erste Endgerät (11) identifiziert, identifizierbar ist.

9. System nach einem der Ansprüche 1 bis 8, **dadurch gekennzeichnet, dass** das Identifikationsmerkmal des zweiten Endgeräts (5), das durch das Erkennungs- und Übertragungsmodul identifizierbar ist, eine Zugriffsadressen-Anschlusskennung ist, die von einem Drittanbieter eines physischen Zugangs übermittelt wird.

10. System nach einem der Ansprüche 1 bis 9, **dadurch gekennzeichnet, dass** das zweite Endgerät (5) ein Modemmittel (3) ist, vor allem vom Typ DSL-Modem, das mit dem drahtgebundene oder Kabelnetz verbunden ist und durch Netz-Identifikationsmittel unter anderen Endgeräten identifizierbar ist, die über das Netz über eine sogenannte IP-Zugriffsadresse des Modemmittels (3) verbunden sind, die das Modemmittel (3) auf einzigartige Weise kennzeichnen, und
dass die Zugriffsadresse des zweiten Endgeräts (5) vorher in einer Datenbank des Servers (8) gemeldet und gespeichert wurde, der dem Mobiltelefon (1) den Zugriff auf den privilegierten Service genehmigt.

11. System nach Anspruch 10 **dadurch gekennzeichnet, dass** das mit dem Wählnetz verbundene Modemmittel (3) mit einem Personalcomputermittel (4) verbunden ist und
dass das Personalcomputermittel (4) mit einer Erkennungs- und Übertragungsanwendung ausgestattet ist.

12. System nach einem der Ansprüche 10 bis 11, **dadurch gekennzeichnet, dass** das Erkennungs- und Übertragungsmodul des interaktiven Servermittels (8) die Anschlusskennung des ersten Endgeräts (IMSI, IMEI, MSISDN) (11) und des zweiten Endgeräts (IP, @prise) (5) und ein zweites Identifikationsmerkmal des zweiten Endgeräts (5), das von der sogenannten MAC-Adresse des zweiten Endgeräts (5) gebildet wird, speichert und
das zweite Endgerät Mittel aufweist, um diese MAC-Adresse des zweiten Endgeräts (5) während der Übertragungssitzung von Daten mit Zeitstempel über das drahtgebundene oder Kabelnetz des zweiten Endgeräts (5) an das interaktive Servermittel (8) zu übertragen, und
dass die MAC-Adresse des zweiten Endgeräts (5) vorher in der Datenbank des interaktiven Servermittels (8) gemeldet und gespeichert wird, um die Überprüfung der Daten vor Authentifizierung des Zugriffs auf den privilegierten Service zu genehmigen.

13. System nach einem der Ansprüche 10 bis 12, **dadurch gekennzeichnet, dass** das Erkennungs- und Übertragungsmodul des interaktiven Servermittels (8) ein Identifikationsmerkmal des ersten Endgeräts (11) speichert, das von der MAC-Adresse des ersten Routers (6) gebildet wird.

14. System nach einem der Ansprüche 10 bis 13, **dadurch gekennzeichnet, dass** das Authentifizierungsmodul des interaktiven Servermittels (8) imstande ist, die Zugriffsadresse des zweiten Endgeräts (5) durch Mittel zu authentifizieren, um die vom zweiten Endgerät (5) erhaltene Zugriffsadresse mit der in seiner Datenbank gespeicherten Adresse zu vergleichen,
die vom zweiten Endgerät (5) erhaltene MAC-Adresse mit in seiner Datenbank gespeicherten Adresse,
sowie die vom Router (6) erhaltene MAC-Adresse mit der gespeicherten Adresse, die mit der Adresse des ersten verwendeten Routers (6) übereinstimmt.

15. System nach Anspruch 14, **dadurch gekennzeichnet, dass** es mit einem Drittanbieter eine Schnittstelle bildet, um die Lieferung der Entsprechung zwischen den IP-Adressen und den physikalischen Adressen oder geografischen Zugriffsadressen anzufordern.

16. System nach einem der Ansprüche 1 bis 15, **dadurch gekennzeichnet, dass** das erste Endgerät (11) Mittel umfasst, um eine Kommunikation durch Nahfunk-Funkmittel mit dem zweiten Endgerät (5) festzustellen und um den Benutzer zu fragen oder nicht, ob er eine Kommunikation vor Genehmigung des Identifikationsverfahrens gegenüber dem zweiten Endgerät (5) und des Authentifizierungsverfahrens gegenüber dem Netz nutzen möchte.

17. System nach einem der Ansprüche 1 bis 16, **dadurch gekennzeichnet, dass** das zweite Endgerät (5) Mittel aufweist, um das erste Endgerät (11) durch Setzen einer Information, die das erste Endgerät (11) auf die exklusive Nutzung oder eine Nutzung mit weniger Zugriffsprivilegien auf den Dienst umschaltet, in den autonomen Modus "außerhalb der Heimzone (14)" der Funktelefonverbindung zu versetzen.

18. Verfahren zur Lokalisierung und Authentifizierung einer mobilen Ausrüstung (11) in einer bestimmten, sogenannten Heimzone (14), das vom System nach Anspruch 1 ungesetzt wird, das einen vorherigen Schritt der Anmeldung und Registrierung der Identifikationsmerkmale des ersten Endgeräts (11) und der Identifikationsmerkmale des zweiten Endgeräts (5) und der verfügbaren Identifikationsmerkmale des ersten verwendeten Routers in einer entfernten Datenbank (9) und einen weiteren vorherigen Schritt der Anmeldung und Registrierung der Identifikationsmerkmale des ersten Endgeräts (11) im Speichermittel des zweiten Endgeräts (5) umfasst, **dadurch gekennzeichnet, dass** es aufweist
während des Schritts der Ortung eine Kommunikation der Identifikationsmerkmale des ersten Endgeräts (11) an das zweite Endgerät (5),
einen Schritt der Anforderung einer Anschlusskennung durch das zweite Endgerät (5) bei diesem ersten Endgerät (11),
einen Schritt der Überprüfung durch das zweites Endgerät (5), um zu überprüfen, dass dieses erste Endgerät (11) eine Kommunikation durch das Wählnetz herstellen darf, wobei der Schritt der Überprüfung des Versands durch das zweite Endgerät (5) eines Identifikationsmerkmal des ersten Endgerätes (11) und mindestens eines Identifikationsmerkmals des zweiten Endgeräts (5) über das Wählnetz an ein interaktives Servermittel (8) umfasst, das sich mit der entfernten Datenbank (9) verbinden kann, wobei diese entfernte Datenbank (9) in einer Heimatregistriereinrichtung "HLR" des Funktelefonnetzes (12) gespeichert ist, bei der das erste Endgerät (11) registriert ist, und
einen Schritt der Genehmigung, der von Genehmigungsmitteln des interaktiven Servermittels (8) durchgeführt wird, um dem ersten Endgerät (11) den Zugriff auf privilegierte Services des Funktelefonbetreibers über den Funkweg oder über das Wählnetz zu genehmigen, wobei die Genehmigungsmittel ausgebildet sind, um Daten zu authentifizieren, die während der Sitzung zur Übertragung von Identifikationsdaten mit Zeitstempel empfangen werden.

19. Verfahren nach Anspruch 18, **dadurch gekennzeichnet, dass** es einen Schritt der Übertragung eines Codes, zum Beispiel mit einer SMS, von Seiten des interaktiven Servers (8) an das erste Endgerät (11) über den Funkweg (15 und 16) umfasst, in dessen Abhängigkeit das erste Endgerät (11) dem zweiten Endgerät (5) befielt, eine Reihe von Aktionen innerhalb des Mobilfunktelefonnetzes auszuführen.

20. Verfahren nach Anspruch 18, **dadurch gekennzeichnet, dass** es einen Schritt der Übertragung eines Codes von Seiten des interaktiven Servers (8) an das zweite Endgerät (5) über das Wählnetz umfasst, in dessen Abhängigkeit das zweite Endgerät (5) dem ersten Endgerät (11) über den Funkweg (15 und 16) befiehlt, eine Reihe von Aktionen innerhalb des Mobilfunktelefonnetzes (12) auszuführen, beispielsweise durch Versand von Informationen per SMS in Abhängigkeit des Codes.

21. Verfahren nach einem der Ansprüche 18 bis 20, **dadurch gekennzeichnet, dass** es einen Schritt der Eröffnung einer Sitzung zur Übertragung von Identifikationsdaten mit Zeitstempel umfasst, die mindestens ein Identifikationsmerkmal des ersten Endgerät (11) und mindestens ein Identifikationsmerkmal des zweiten Endgeräts (5) über das Wählnetz an ein interaktives Servermittel (8) enthalten, das imstande ist, eine Verbindung mit der entfernten Datenbank (9) des Funktelefonnetzes (12) aufzubauen.

22. Verfahren nach einem der Ansprüche 18 bis 21, **dadurch gekennzeichnet, dass** es umfasst:
- einen Schritt des Aufbaus einer Verbindung mit der entfernten Datenbank (9) durch das interaktive Servermittel (8), um durch das interaktive Servermittel (8) an das erste Endgerät (11) eine Authentifizierungsanforderung zu übertragen,
- einen Schritt des Empfangs der vom Endgerät (11) gelieferten und vom interaktiven Servermittel (8) übertragenen Antwort und des Vergleichs dieser Antwort mit der von der entfernten Datenbank errechneten Antwort, und
- einen Schritt der Speicherung durch den interaktiven Server (8) einer Information mit Zeitstempel (IN - OUT) in einer Datenbank in Übereinstimmung mit den Anschlusskennungen des ersten Endgeräts (11), was erlaubt festzustellen, ob sich das erste Endgerät (11) in der vorbestimmten, sogenannten Heimzone (14) befindet oder nicht und zu entscheiden, ob das erste Endgerät auf privilegierte Services des Funktelefonbetreibers über den Funkweg oder über das Wählnetz zugreifen darf oder nicht.

23. Verfahren nach Anspruch 22, **dadurch gekennzeichnet, dass** es einen Schritt des Versands von Codes über das drahtgebundene Netz umfasst, was zu einer Reihe von Aktionen über das Funknetz führt oder umgekehrt.

24. Verfahren nach Anspruch 23, **dadurch gekennzeichnet, dass** es einen Schritt der Kommunikation der Information mit Zeitstempel (IN - OUT) an das zweite Endgerät (5) umfasst, um den Zugriff des ersten Endgerät (11) auf privilegierte Services des Funktelefonbetreibers über den Funkweg oder über das Wählnetz über das zweite Endgerät (5) zu genehmigen oder nicht.

25. Verfahren nach einem der Ansprüche 22 ä 24, **dadurch gekennzeichnet, dass** der Schritt der Genehmigung des Zugriffs auf privilegierte Services für das erste Endgerät (11) durch das interaktive Servermittel (8) umfasst:
- einen vorherigen Schritt der Anmeldung und Speicherung der Anschlusskennungen des ersten Endgerät (IMSI, IMEI, MSISDN) (11), des zweiten Endgeräts (IP, @prise, MAC) (5), eventuell des ersten verwendeten Routers (MAC) (6) und eines Genehmigungszustands (IN - OUT) durch ein Erkennungs- und Übertragungsmodul des interaktiven Servermittels (8),
- einen Schrit der Übertragung dieser Anschlusskennungen (IMSI, IMEI, MSISDN, IP, @prise, MAC(5), MAC)(6)) des ersten (11) und des zweiten (5) Endgeräts und des ersten verwendeten Routers an das interaktive Servermittel (8) während der Sitzung zur Übertragung von Daten mit Zeitstempel über das drahtgebundene oder Kabelnetz und
- einen Schritt der Überprüfung der Daten und des Zustands (IN - OUT) der gespeicherten Information in Übereinstimmung mit den Anschlusskennungen des erstes Endgerät (11) durch das interaktive Servermittel (8) vor Genehmigung des Zugriffs auf privilegierte Services des erstes Endgerät (11).

26. Verfahren nach Anspruch 25, **dadurch gekennzeichnet, dass** der Schritt der Genehmigung (8) durch das interaktive Servermittel des Zugriffs auf den privilegierten Service für das erste Endgerät (11) umfasst:
- einen Schritt der vorherigen Anmeldung und Speicherung durch ein Erkennungs- und Übertragungsmodul des interaktiven Servermittels (8) der Anschlusskennungen des ersten Endgeräts, die von der sogenannten MAC-Adresse des ersten Routers (6) gebildet werden,
- einen Schritt der Übertragung dieser Anschlusskennung durch das zweite Endgerät (5) an das interaktive Servermittel (8) während der Sitzung zur Übertragung von Daten mit Zeitstempel über das drahtgebundene oder Kabelnetz und
- einen Schritt der Überprüfung der Daten durch das interaktive Servermittel (8) vor Genehmigung des Zugriffs auf den privilegierten Service des ersten Endgeräts (11).
